Europäisches Patentamt

**European Patent Office**

**Office européen des brevets**

(11) Publication number: **0 043 648**
A2

# EUROPEAN PATENT APPLICATION

(21) Application number: **81302562.4**

(22) Date of filing: **09.06.81**

(51) Int. Cl.³: **B 01 D 19/02**

(30) Priority: **25.06.80 US 162944**

(43) Date of publication of application: **13.01.82**
**Bulletin 82/2**

(84) Designated Contracting States: **AT BE CH DE FR GB IT LI LU NL SE**

(71) Applicant: **BS & B ENGINEERING COMPANY INC.,**
**8303 Southwest Freeway, Houston Texas 77074 (US)**

(72) Inventor: **Anderson, Howard W., 4834 Imogene, Houston Texas 77096 (US)**
Inventor: **Peterson, Adrian, 16005 Singapore, Houston Texas 77040 (US)**

(74) Representative: **Haigh, Charles Roy, J.A. KEMP & CO. 14 South Square Gray's Inn, London WC1R 5EU (GB)**

(54) Separator and foam breaking element therefor.

(57) A separator for separating oil and gas with a foam breaking element therefor, the separator including a vessel (12) having an inlet adjacent one end and a gas outlet (20) and a liquid outlet (26) adjacent the other end, and a foam breaking structure (30) extending across the interior of the vessel between the inlet and the gas outlet, whereby all the gas and foam is in the vessel into the foam breaking structure. The structure itself comprises a plurality of vertical plates (40) with zig zag shaped divider plate (44) secured between each pair of vertical plates to form passageways (48), and spacer strips (42) secured between the vertical plates (40) and the divider plates (44) to define drain passageways through which liquid may drain.

DESCRIPTION

TITLE: SEPARATOR AND FOAM BREAKING ELEMENT THEREFOR

The present invention relates to an oil and gas separator and to an improved foam breaking element used in the separator.

Prior separators which have been used to handle foaming liquids have generally included a foam breaking or liquid separating element such as parallel plates set at an angle to allow liquid drops from ruptured bubbles to drain to the lower portion of the separation vessel such as shown in U.S. Patent Nos. 2,349,944; 3,795,091 and 3,413,779. Other foam breaking structures have included wire mesh pads (U.S. Patent No. 3,212,232) tortuous paths (U.S. Patent Nos. 1,970,783; 3,813,855 and 3,338,035) and a modular structure of sloping parallel plates (U.S. Patent No. 3,626,673).

According to the present invention we provide a foam separator comprising a vessel having an inlet, a gas outlet and a liquid outlet, and a foam breaking structure extending across the interior of said vessel between said inlet and said gas outlet, whereby all gas and foam in said vessel enters the foam breaking structure, the foam breaking structure defining a plurality of elongate passageways extending longitudinally of the vessel and a plurality of drain passages with each passageway having a lower surface sloping downwardly towards a drain passage.

Such a separator has improved foam breaking characteristics, which breaks foam efficiently and avoids reforming of foam from the broken foam.

Advantageously the passageways are sufficiently small to provide laminar flow therethrough with a maximum of surface area and a minimum of area which forms a block to the flow.

The invention also provides a foam breaking structure for mounting in the vessel of a foam separator, said structure comprising a plurality of vertical plates with zig zag shaped divider plates secured between each pair of vertical plates to form a plurality of horizontal elongate passageways with downwardly inclined lower surfaces, and means spacing portions of the lower ends of the lower surfaces of each passageway from the adjacent vertical plate to provide a drain passage for each passageway.

In order that the present invention will be more fully understood, the following description is given, merely by way of example, reference being made to the accompanying drawings, wherein:

Figure 1 is a longitudinal sectional view of one embodiment of foam separator according to the present invention;

Figure 2 is a transverse section taken along line 2-2 in Figure 1;

Figure 3 is an enlarged end elevation of a portion of the form of foam breaking structure of the separator;

Figure 4 is an exploded perspective view of the elements of the portion of the foam breaking structure of Figure 3;

Figure 5 is a view similar to Figure 1 with a different modular structure of the foam breaking apparatus;

Figure 6 is a transverse section taken along line 6-6 in Figure 5;

Figure 7 is an enlarged end elevation of a portion of a modified form of foam breaking structure of the separator; and

Figure 8 is an exploded perspective view of the elements of the portion of the foam breaking structure shown in Figure 7.

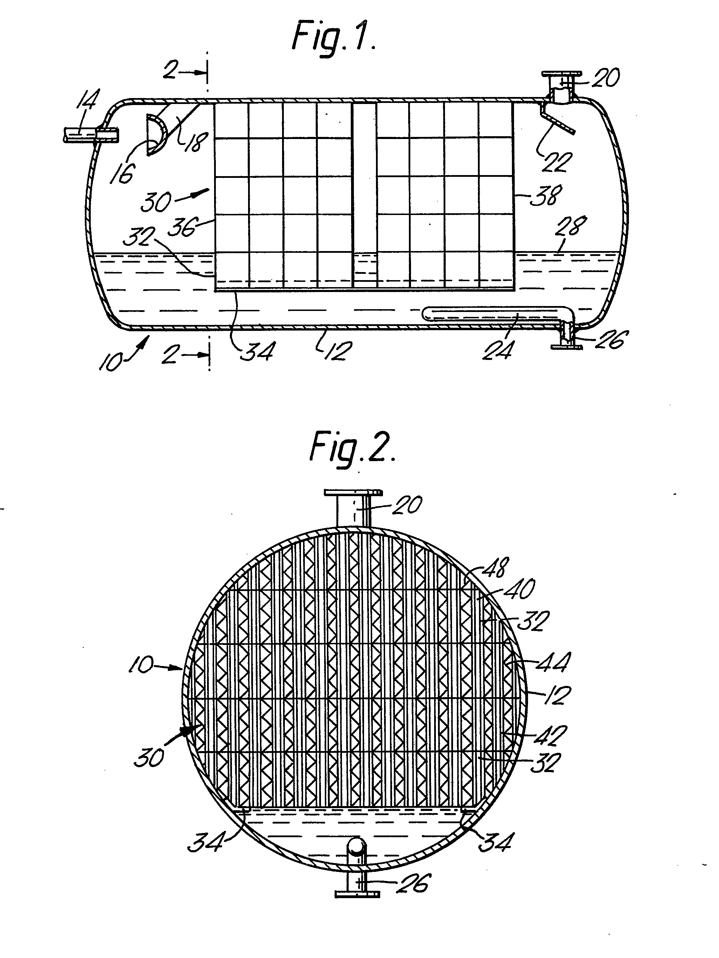

Separator 10 shown in Figure 1 includes a vessel 12 with an inlet 14 at the upper portion of one end and directed towards a dished deflector 16 which is supported on the interior of the vessel 12 by a strut 18. A gas outlet 20 extends from the upper portion of vessel 12 at the end opposite inlet 14 with an inclined baffle 22 thereunder to cause gas to flow therearound to reach outlet 20. A slotted pipe 24 is positioned close to the bottom of the vessel 12 and is connected to a liquid outlet 26 so that all liquid discharged from the separator 10 flows through the slots on the lower side of pipe 24, through pipe 24 and out of liquid outlet 26. Suitable controls (not shown) are provided on liquid outlet 26 and gas outlet 20 to maintain the preselected pressure and liquid level 28 within separator 10. A foam breaking structure 30 is positioned within the vessel 12 between inlet 14 and outlets 20 and 26 so that all foam and gas entering the separator 10 through the inlet 14 enters the structure 30.

The foam breaking structure 30 includes two spaced apart stacks 36 and 38 of elongate modules 32, positioned horizontally within vessel 12, the longitudinal axis of each module extending transversely of the vessel 12. The lower tiers of modules 32 are supported at their ends on support brackets 34 which are secured within vessel 12 by welding or other suitable means. The remaining tiers of modules are supported on the lower tiers and substantially fill the upper interior of vessel 12.

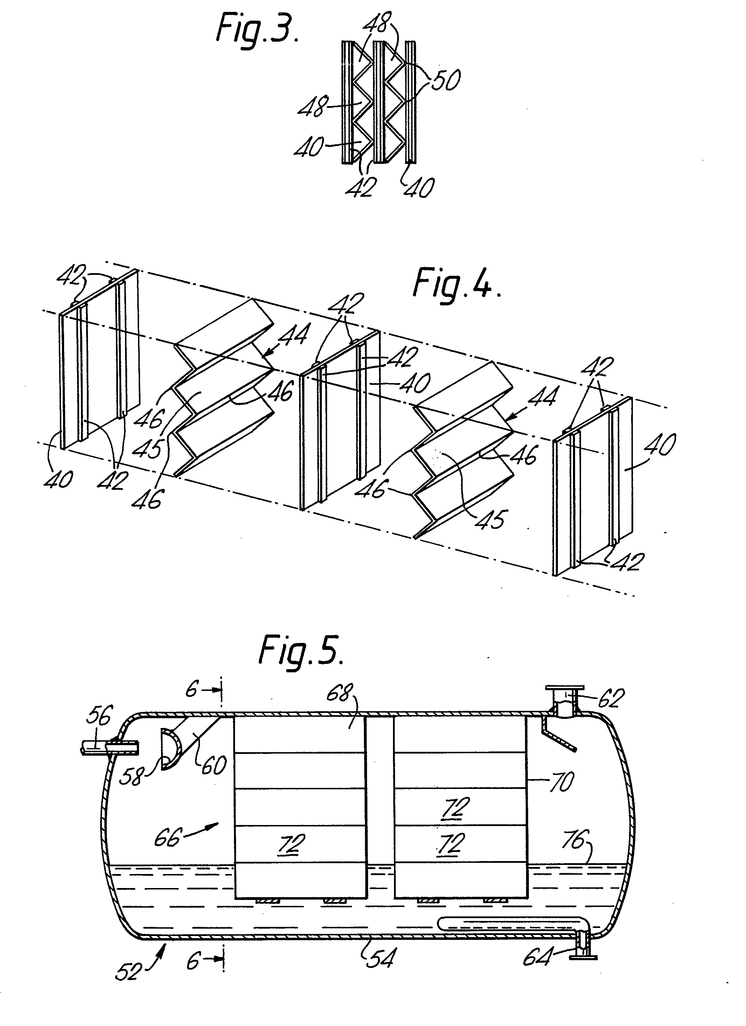

Each module 32, as shown in Figures 3 and 4, includes a plurality of vertical plates 40 with spacing means such as spacer strips 42 secured to each side of plates 40 e.g. by spot welding, and divider plates 44 which are zig zag in shape, are secured in position, with their peaks 46 engaging the strips 42 and preferably spot welded thereto.

The modules 32 thus provide a plurality of horizontally extending elongate passageways 48 with draining means including a plurality of vertically extending drain passages 50 (the space between peaks 46 and plates 40) and the lower surface 45 of each passageway 48 slopes downward towards a drain passage 50. It is preferred that the positioning of modules 32 be arranged so that each of passageways 48 is substantially continuous through each of sections 36 and 38.

In the construction of Figures 5 to 8, the separator 52 includes vessel 54 with an inlet 56 at one end directed at a deflector 58 which is supported within the vessel 54 by a strut 60. A gas outlet 62 and a liquid outlet 64 are the same as outlets 20 and 26 previously described, and a foam breaking structure 66 is positioned within vessel 54 so that all gas in the separator passes therethrough.

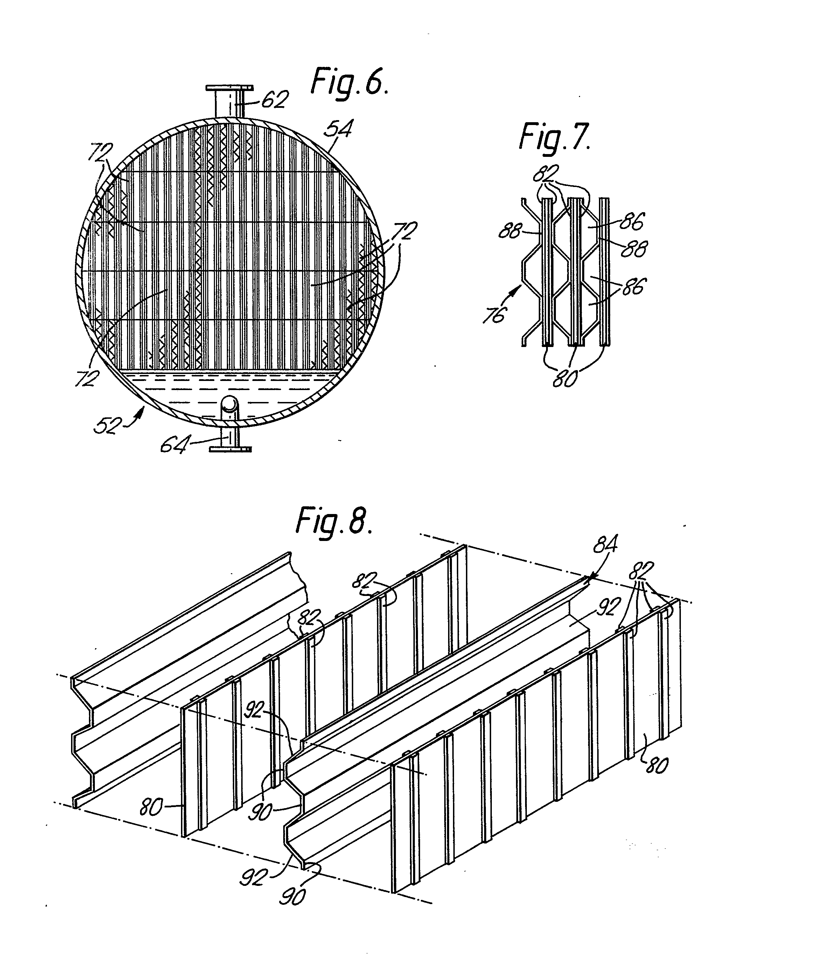

The structure 66 is divided and is formed of two stacks 68 and 70 of longitudinally extending modules 72. Each module 72 in the lower tier of each section is supported on two support strips 74 which extend across the lower portion of vessel 54 substantially below liquid level 76. Thus, in this modified form of separator, the modules extend longitudinally of the separator while in the construction of Figures 1 to 4 modules 32 extend transversely of the separator. The actual internal structure of the modules 72 may be of the form described above and shown in Figures 3 and 4. Alternatively, they may be of the modified form shown in Figures 7 and 8, and which again includes a plurality of vertical plates 80, spacing means such as spacer strips 82 secured, e.g. by spot welding to both sides of plates 80 and divider plates 84 secured between plates 80, define a plurality of horizontally extending elongate passageways 86. Each passageway has its lower surface sloping downward towards a drain passage 88 (the space between the flats on divider plates 84 and vertical plates 80). Divider plates 84 have a zig zag shape with vertical portions 90 between each inclined portion 92.

By using relatively thin sheet material for the vertical plates and divider plates of the foam breaking structure (preferably in the range from 0.3 to 0.4 mm with 19 mm spacing of the vertical plates and spacer strips from 1.5 to 3.2 mm thick) there is a very small blocked area to the flow of gas and foam through the structure. Even though vertical plates and divider plates of the foam breaking apparatus are relatively thin, the overall structure is sufficiently strong because of its honeycomb construction. The designs of the foam breaking apparatus provide a relatively small passageway so that there is laminar flow in each passageway and there is a maximum of surface area around each passageway. There is substantial equal flow distribution resulting from the small flow area of each passageway. Also, there is adequate drainage along the sloping bottom of each passageway and the vertical plates which does not cause additional foam or re-entrainment of separated liquid.

The improved performance of the foam breaking apparatus is believed to result from the wedging of bubbles in the lower tapered portion of each passageway and the flow through the passageway past the bubbles distorts the bubble to break its skin to thereby effect separation of the gas and liquid.

It is preferred that the slope of the lower surface of each of the passageways be approximately 45° and slopes from 30° to 60° from vertical are believed to be suitable for the improved performance of the present invention.

It is also believed that the improved separator and foam breaking apparatus of the present invention functions efficiently in the removal of entrained liquid from flowing gas.

C L A I M S

1.    A foam separator comprising a vessel (12,54) having
an inlet (14,56), a gas outlet (20,62) and a liquid
outlet (26,64) and a foam breaking structure (30,66)
extending across the interior of said vessel between
said inlet and said gas outlet, whereby all gas and foam
in said vessel enters the foam breaking structure,
characterised in that the foam breaking structure (30,66)
defines a plurality of elongate passageways (48,86)
extending longitudinally of the vessel (12,54) and a
plurality of drain passages (50,88) with each passageway
having a lower surface (45,92) sloping downwardly towards
a drain passage.

2.    A foam separator according to claim 1, characterised
in that the foam breaking structure includes a plurality
of vertical plates (40,80) with a zig zag shaped divider
plate (44,84) secured between each pair of vertical plates
to form said passageways.

3.    A foam separator according to claim 2, characterised
in that        spacer strips (42,82) are secured between said
vertical plates (40,80) and said divider plates (44,84),
to define said drain passages.

4.    A foam separator according to claim 2 or 3,
characterised in that said divider plates (84) include inclined portions (92) and a vertical portion (90) between each
pair of said inclined portions, the vertical portions being
secured to the vertical plates (80).

5.   A foam separator according to any preceding claim,
characterised in that the foam breaking structure is formed
from at least one stack (36,38) of elongate modules (32),
the longitudinal axis of each module extending transversely
of the vessel (12), but with the individual passageways
(48) thereof extending longitudinally of the vessel.

6.   A foam separator according to any one of claims 1 to
4, characterised in that the foam breaking structure is
formed on at least one stack (68,70) of elongate modules
(72), the longitudinal axis of each module and of the
individual passageways (86) thereof extending longitudinally
of the vessel.

7.   A foam separator according to any preceding claim,
characterised in that said passageways (48,86) are of
sufficiently small cross-sectional area to ensure that
substantially all flow therethrough is laminar flow.

8.   A foam breaking structure for mounting in the vessel
of a foam separator, characterised in that said structure
comprises a plurality of vertical plates (40,80) with
zig zag shaped divider plates (44,84) secured between each
pair of vertical plates to form a plurality of horizontal
elongate passageways (48,86) with downwardly inclined
lower surfaces (45,92), and means (44,84) spacing portions
of the lower ends of the lower surfaces (45,92) of each
passageway from the adjacent vertical plate (40,80) to
provide a drain passage (50,88) for each passageway.

9.     A foam breaking structure according to claim 8, characterised in that said spacing means comprises spacer strips (42,82) secured between each divider plate and each vertical plate.

10.    A foam breaking structure according to claim 8 or 9, characterised in that said divider plates (84) include inclined portions (92) and a vertical portion (90) between each pair of inclined portions, the vertical portions being secured to the vertical plates (80).

Fig.1.

Fig.2.

0043648

1/3

*Fig.3.*

*Fig.4.*

*Fig.5.*

Fig.6.

Fig.7.

Fig.8.